# EUROPEAN PATENT SPECIFICATION

(11) **EP 1 926 008 B1**
(45) Date of publication and mention of the grant of the patent: **11.05.2011**
(21) Application number: 07103884.8
(22) Date of filing: 09.03.2007
(51) Int. Cl.: G05D 16/10

(54) **Gas pressure reducer**
Gasdruckminderer
Réducteur de pression de gaz

(30) Priority: 27.11.2006 IT BO20060099 U
(43) Date of publication of application: 28.05.2008
(73) Proprietor: Metatron S.r.l., 40129 Bologna (IT)
(72) Inventor: Notaro, Lucio, 40131 Bologna (IT)
(74) Representative: Lanzoni, Luciano

(56) References cited:
- US-A- 5 419 365
- US-A- 5 899 221

## Description

The present invention relates to a gas pressure reducer.

In particular, the present invention relates to a pressure reducer which can be used in gas supply systems for internal combustion engines.

Economic advantages and limited pollution are achieved by applying systems which supply gas such as methane or liquid petroleum gas (LPG) on internal combustion engines, both fixed and for vehicle drive.

These gas supply systems usually comprise a pressurised gas tank, a plurality of pipes connecting the gas tank to the engine and a pressure reducer which reduces the pressure of the gas in the tank to a pressure suitable for supplying it to the engine and therefore compatible with combustion parameters.

Depending on how full the tank is, the pressure of the gas in the tank is usually between 200 and 15 bar. In contrast, the pressure for supplying the gas to the engine must be kept at a substantially constant predetermined value.

According to another prior solution by the Applicant, the reducer advantageously comprises a single reduction chamber, being much more compact than earlier reducers which had a plurality of reduction stages and a reduction chamber for each stage.

Said solution, although having many advantageous aspects, may be improved in terms of efficiency and practical use.

The above-mentioned single chamber is basically formed by the presence of a movable shutter, or slider, in a respective jacket. The shutter is subject to the opposing action of an elastic element, usually a helical spring, which has a first end coil in contact with the shutter whilst the second end coil, longitudinally opposite the first, engages a ring-shaped inner wall of the jacket.

A first, rough calibration of the reducer is provided by selecting the spring which engages with the movable shutter whilst, for precision calibration, work is required inside the jacket, inserting or removing suitable spacers between the second coil and the ring-shaped wall of the jacket.

The fact that precision calibration is basically done inside the jacket implies that many of the reducer's components, including the jacket, the shutter and the spring, must be disassembled then reassembled.

Even if this is done by specialised, expert personnel, inevitably the above-mentioned pressure reducer calibration as a whole ties up a significant amount of time and resources.

Document US 5899221 discloses a fluid pressure regulator capable of adjustably setting a cut-off pressure between an upper and a lower limit. The regulator has a two-piece valve body where the two pieces are threadably joined such that adjusting the distance between the two pieces of the valve body.

Document US 5419365 shows a regulator for high pressure water blast system including a body which houses a replaceable valve cartridge that includes a tubular seat member and an axially slidable valve element. The seat member is hydraulically biased against a stop shoulder and the valve element is hydraulically biased towards an adjusting knob.

The aim of the present invention is to provide a pressure reducer which allows practical and rapid calibration and at the same time is simple and economical to make.

The technical features of the invention, with reference to the above aims, are clearly described in the claims below and its advantages are more apparent from the detailed description which follows, with reference to the accompanying drawings which a illustrate preferred embodiment of the invention provided merely by way of example without restricting the scope of the inventive concept, and in which:
- Figure 1 is a perspective top view of a pressure reducer in accordance with the present invention;
- Figure 2 is a cross-section of the pressure reducer of Figure 1.

As illustrated in the accompanying drawings, the numeral 1 denotes as a whole the pressure reducer in accordance with the present invention.

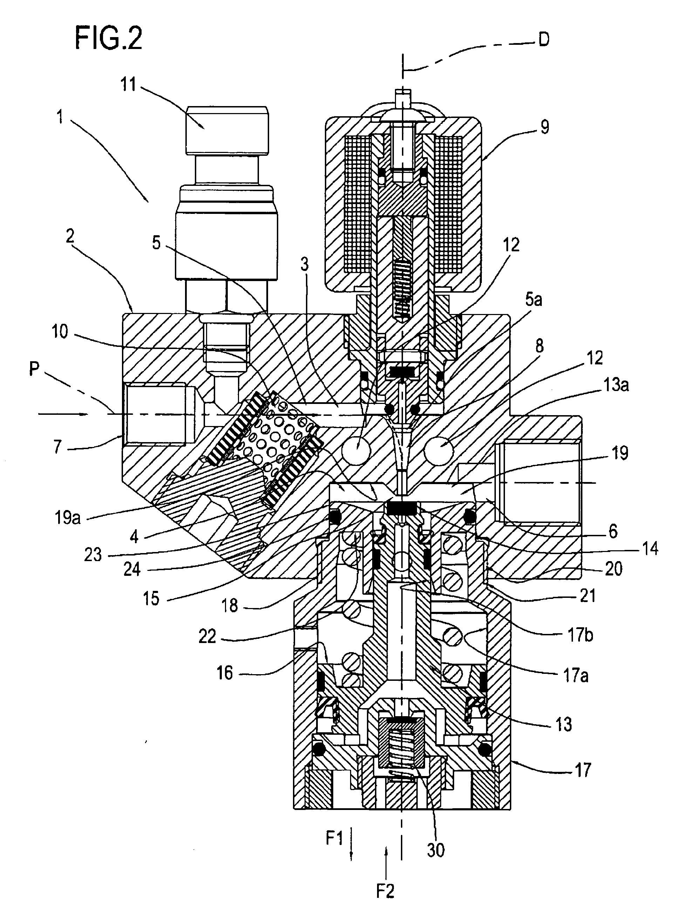

With reference to Figure 2, the reducer 1 comprises a central containment body 2 inside which there extends a pipe 3 through which the gas passes and a compensation chamber 4.

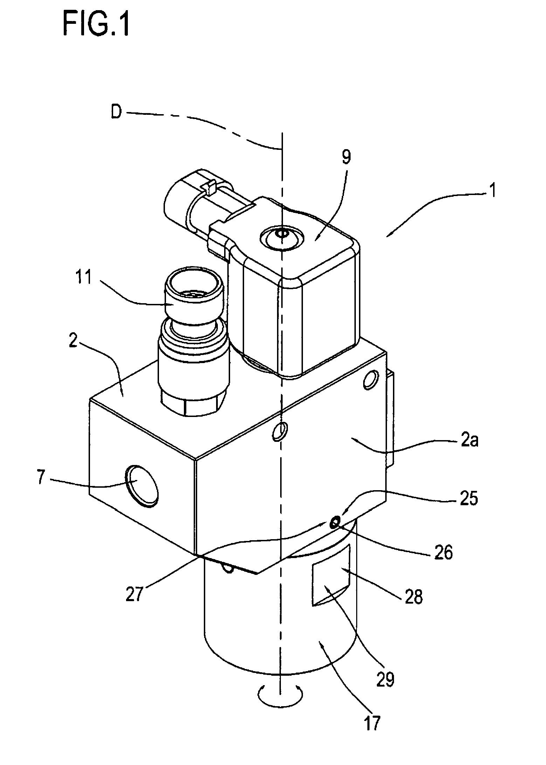

The gas, as it passes through the pipe 3, moves forward along a path P shown with a dashed line in Figure 1.

The pipe 3 comprises a first, inlet stretch 5 and a second, outlet stretch 6 for the gas, operatively connected to one another by the compensation chamber 4.

The first, inlet stretch 5 of the pipe 3 has a mouth 7 designed to be fluidly connected with a tank, not illustrated, used to store the gas and an end portion 5a, giving onto the compensation chamber 4, the portion 5a substantially extending along a predetermined direction D and having a first narrowing 8.

Acting on the end portion 5a of the first, inlet stretch 5 there is a solenoid valve 9, of the known type, which connects the gas tank with the reducer 1 when the internal combustion engine is on. The solenoid valve interrupts that connection when the engine is switched off. Therefore, the solenoid valve 9 substantially has a safety function, to prevent the pressure of the gas contained in the tank and in the first stretch 5 of the pipe 3 from continuously acting on the reducer 1 seals.

In Figure 2 the solenoid valve 9 is illustrated in a configuration which opens the pipe 3, this configuration therefore being assumed when the internal combustion engine is on.

The reducer 1 also comprises, positioned along the first stretch 5 of the pipe 3, a filter 10 designed to catch the impurities present in the gas entering the reducer 1.

The reducer 1 also comprises a sensor 11 for detecting the pressure of the gas entering the reducer 1, the sensor 11 being connected to the pipe 3 upstream of the filter 10 on the path P followed by the gas passing through the body 2.

With this arrangement, the sensor 11 can detect, apart from negligible pressure losses in the pipe, not illustrated, connecting the gas tank and the reducer 1, the pressure value in the tank itself and, from that value, therefore arrive at the quantity of gas present in the tank.

In the central containment body 2 there is a pair of heating pipes, labelled 12. A hot fluid, for example the engine coolant, is introduced into said heating pipes 12 so as to counteract the significant reduction in temperature to which the gas is subjected after it has expanded.

Again with reference to Figure 2, the compensation chamber 4 extends below the end portion 5a of the inlet stretch 5 and is formed by the containment body 2 together with a slider 13.

The slider 13 can move both ways in direction D which therefore forms a direction of sliding for the slider 13.

As shown in Figure 2, at an upper end zone 13a, the slider 13 has an active portion 14 which, together with the end portion 5a of the first, inlet stretch 5, forms a second narrowing 15 of the gas pipe 3.

When the slider 13 moves along the direction D in a first direction, indicated by the arrow F1 in Figure 2, the active portion 14 moves away from the end portion 5a of the inlet stretch 5 and, consequently, the dimensions of the second narrowing 15 increase, that is to say, the area of the cross-section for the passage of the gas flow at that point increases.

On the other hand, when the slider 13 moves in a second direction, indicated by the arrow F2, towards the end portion 5a of the inlet stretch 5, the dimensions of the second narrowing 15 are reduced.

Again with reference to Figure 1, the slider 13 comprises a ring-shaped flange 16 which substantially extends perpendicular to the predetermined direction D of sliding of the slider 13.

The slider 13 is housed in and supported by a cylindrical jacket 17 which extends longitudinally according to the predetermined direction D.

The cylindrical jacket 17 has a first cylindrical inner wall 17a on which the ring-shaped flange 16 slidably engages, and a second cylindrical inner wall 17b, coaxial with the first and having a smaller diameter, on which the slider 13 slidably engages with a stretch close to the active portion 14.

The cylindrical jacket 17 is connected to the central containment body 2 in a sealed fashion by a screw connection 18.

In detail, in the body 2 there is an axially symmetrical cavity 19 having a base wall 19a which partly delimits the top of the compensation chamber 4. The axially symmetrical cavity 19 also comprises an internally threaded cylindrical surface 20 on which a corresponding externally threaded cylindrical portion 21 of the jacket 17 engages with a screwing action.

Again with reference to Figure 2, the jacket 17 comprises an end zone 22 extending from the threaded cylindrical portion 21 towards the base wall 19a and giving onto the second narrowing 15.

At the end zone 22, the jacket 17 comprises a circumferential groove 23 for housing a ring-shaped gas seal 24. In particular, when the jacket 17 is at least partly inserted in the axially symmetrical cavity 19, the ring-shaped seal 24 engages with a cylindrical inner wall of the cavity 19 to provide a gasproof seal preventing unwanted gas leaks through the screw connection 18.

As illustrated in Figure 1, in a first outer wall 2a of the body 2 there is a threaded through-hole 25 opening into the cavity 19, at its threaded cylindrical surface 20.

A grub screw 26 is inserted and screwed in the hole 25, being designed to engage with one end in contact with the cylindrical portion 21 of the jacket 17.

When, after being screwed in the hole 25, the grub screw 26 engages the threaded cylindrical portion of the cylindrical jacket 17, it prevents rotation of the jacket 17 relative to the central body 2.

In this way, a predetermined position of the active portion 14 of the slider 13 relative to the second narrowing 15 is fixed. The slider 13 is supported by the jacket 17 and therefore having defined a fixed position for the jacket 17 relative to the body 2 is the equivalent of defining a fixed position for the slider 13, obviously apart from the possible movements of the slider along the direction D, movements due to the variation in the pressure of the gas passing through the pipe 3.

The grub screw 26 forms, for the jacket 17, locking means 27 designed to prevent its screwing and/or unscrewing rotation relative to the central body 2.

According to an alternative embodiment of the invention, not illustrated, the locking means 27 comprise, in place of or in addition to the grub screw 26, a threaded locking ring, also not illustrated, screwed on the threaded cylindrical portion 21 of the cylindrical jacket 17 and designed to tighten against a second outer wall 2b of the body 2, said wall visible in Figure 2. Basically, the locking ring, not illustrated, acts as a tightening lock nut.

The reducer 1 also comprises, supported by the jacket 17, a relief valve 30, of the known type and therefore not described in detail, designed to prevent the pressure in the chamber 4 from exceeding predetermined safety values for any reason.

In practice, as illustrated in Figure 2, the active portion 14 of the slider 13, together with the end portion 5a of the first stretch 5, as already indicated, forms the second narrowing 15 of the gas pipe 3. Since at said second narrowing 15 the gas expands and its pressure is simultaneously reduced, obviously the size of that narrowing 15 affects the pressure of the gas in the compensation chamber 4 and downstream of it, relative to the gas supply path P.

The possibility of adjusting the position of the active portion 14 of the slider 13 relative to the end portion 5a of the first stretch 5 therefore constitutes a means of adjusting the pressure of the gas downstream of the second narrowing 15, that is to say, in other words, the pressure of the gas supplied to the internal combustion engine, not illustrated.

Again with reference to Figure 2, by rotating the cylindrical jacket 17 about its own axis coinciding with the direction D, since the jacket 17 engages with the body 2 by means of a screwing action, a rotation of the jacket 17 corresponds to a jacket movement along the direction D. The relationship between the angle of rotation and forward movement clearly depends on the thread used for the screw connection 18.

Basically, by screwing and unscrewing the jacket 17 relative to the body 2, it is possible to continuously change the position of the active part of the slider relative to the end portion 5a and therefore to change the size of the second narrowing 15. This consequently changes the pressure of the gas which flows into the compensation chamber 4 and is then supplied to the internal combustion engine.

Advantageously, with the present invention, the pressure of the gas at the reducer 1 outlet is adjusted in a practical and effective way by simply rotating a part of the reducer 1, without having to disassemble any reducer part or component.

Advantageously, as illustrated in Figure 1, on the cylindrical outer wall of the jacket 17 there are one or more zones 28 for engaging with a tool, not illustrated, such as a spanner, for precision rotation of the jacket 17.

In the embodiment illustrated, the engagement zone 28 consists of a flattened portion 29 of the cylindrical outer wall of the jacket 17.

## Claims

1. A gas pressure reducer comprising:
- a central body (2);
- a pipe (3) through which the gas passes, made in the central body (2), the pipe (3) having a first narrowing (8) designed to produce a fall in the gas pressure;
- a slider (13) able to move along a predetermined direction (D) and having an active portion (14) forming a second narrowing (15) in the pipe (3);
- a jacket (17) for housing and supporting the slider (13), the jacket (17) being connected to the central body (2) by a screw connection (18), in such a way that by screwing or unscrewing the jacket (17) relative to the body (2), the active portion (14) of the slider (13) housed in the jacket (17) is moved towards or, respectively, away from the body (2), varying the size of the second narrowing (15);
the cylindrical jacket (17) having a first cylindrical inner wall (17a) on which a ring-shaped flange (16) of the slider (13) slidably engages, and a second cylindrical inner wall (17b), coaxial with the first and having a smaller diameter, on which the slider (13) slidably engages with a stretch close to the active portion (14);
the gas pressure reducer being **characterised in that** the first inner wall (17a) and the second inner wall (17b) are realised in a single body.

2. The pressure reducer according to claim 1, **characterised in that** the jacket (17) comprises a threaded cylindrical portion (21) designed to engage with a screwing action on a respective internally threaded cylindrical surface (20) in the body (2).

3. The pressure reducer according to claim 2, **characterised in that**, at an end zone (22) designed to give onto the second narrowing (15), the jacket (17) comprises a circumferential groove (23) for housing a ring-shaped gas seal (24).

4. The pressure reducer according to any of the claims from 1 to 3, **characterised in that** it comprises jacket (17) locking means (27), said means (27) being designed to prevent jacket (17) screwing or unscrewing rotation on the body (2) when a desired slider (13) active portion (14) position has been reached relative to the body (2).

5. The pressure reducer according to claim 4, **characterised in that** the locking means (27) comprise a threaded grub screw (26) inserted in a respective through-hole (25) made in the body (2), the grub screw (26) being designed to engage the jacket (17).

6. The pressure reducer according to claim 4, **characterised in that** the locking means comprise a threaded locking ring, screwed on said threaded cylindrical portion (21) of the jacket (17) and designed to tighten against an outer wall of the body (2).

7. The pressure reducer according to any of the claims from 1 to 6, **characterised in that** the jacket (17) comprises at least one zone (28) for engaging with a tool for rotating the jacket (17) relative to the body (2).

## Patentansprüche

1. Gasdruckminderer, umfassend:
- einen zentralen Körper (2);
- ein im zentralen Körper (2) gefertigtes Rohr (3), durch welches das Gas strömt, wobei das Rohr (3) eine Einengung (8) aufweist, die zur Erzeugung eines Gasdruckabfalls gestaltet ist;
- einen Schieber (13), der zur Bewegung entlang einer vorbestimmten Richtung (D) fähig ist und einen aktiven Abschnitt (14) aufweist, der eine zweite Einengung (15) im Rohr (3) bildet;
- eine Verkleidung (17) zum Aufnehmen und Halten des Schiebers (13), wobei die Verkleidung (17) durch eine Schraubverbindung (18) derart mit dem zentralen Körper (2) verbunden ist, dass durch Verschrauben oder Lösen der Verkleidung (17) in Bezug auf den Körper (2) der aktive Abschnitt (14) des in der Verkleidung (17) angeordneten Schiebers (13) zum beziehungsweise weg vom Körper (2) bewegt wird und dabei die Größe der zweiten Einengung (15) verändert;
wobei die zylindrische Verkleidung (17) eine erste zylindrische Innenwand (17a), auf der ein ringförmiger Flansch (16) des Schiebers (13) verschiebbar eingreift, sowie koaxial zur ersten eine einen kleineren Durchmesser aufweisende zweite zylindrische Innenwand (17b) aufweist, auf welcher der Schieber (13) in eine Ausdehnung nahe des aktiven Abschnitts (14) verschiebbar eingreift;
wobei der Gasdruckminderer **dadurch gekennzeichnet ist, dass** die erste Innenwand (17a) und die zweite Innenwand (17b) in einem Körper ausgebildet sind.

2. Druckminderer nach Anspruch 1, **dadurch gekennzeichnet, dass** die Verkleidung (17) einen mit einem Gewinde versehenen zylindrischen Abschnitt (21) umfasst, der einschraubend zum Eingriff auf einer entsprechenden innen mit einem Gewinde versehenen zylindrischen Oberfläche (20) im Körper (2) gestaltet ist.

3. Druckminderer nach Anspruch 2, **dadurch gekennzeichnet, dass** die Verkleidung (17) bei einem Endbereich (22), der auf die zweite Einengung (15) zeigend gestaltet ist, eine umlaufende Rille (23) zum Aufnehmen einer ringförmigen Gasdichtung (24) umfasst.

4. Druckminderer nach einem der Ansprüche 1 bis 3, **dadurch gekennzeichnet, dass** er eine Verkleidung (17) verschließende Mittel (27) umfasst, wobei die Mittel (27) zur Verhinderung eines durch Verschrauben oder Lösen verursachten Drehens der Verkleidung (17) auf dem Körper (2) bei Erreichung einer gewünschten Stellung des aktiven Abschnitts (14) des Schiebers (13) in Bezug zum Körper (2) gestaltet sind.

5. Druckminderer nach Anspruch 4, **dadurch gekennzeichnet, dass** die verschließenden Mittel (27) einen Gewindestift (26) umfassen, der in ein entsprechendes im Körper (2) gefertigtes Durchgangsloch (25) eingefügt ist, wobei der Gewindestift (26) zum Eingreifen in die Verkleidung (17) gestaltet ist.

6. Druckminderer nach Anspruch 4, **dadurch gekennzeichnet, dass** die verschließenden Mittel ein mit einem Gewinde versehenden Verschlussring umfassen, der auf dem mit einem Gewinde versehenen zylindrischen Abschnitt (21) der Verkleidung (17) verschraubt ist und zum Anziehen gegen eine Außenwand des Körpers (2) gestaltet ist.

7. Druckminderer nach einem der Ansprüche 1 bis 6, **dadurch gekennzeichnet, dass** die Verkleidung (17) mindestens einen Bereich (28) zum Eingreifen in ein Werkzeug zum Drehen der Verkleidung (17) in Bezug zum Körper (2) umfasst.

## Revendications

1. Réducteur de pression de gaz comprenant :
- un corps central (2) ;
- une conduite (3) par laquelle le gaz passe, réalisée dans le corps central (2), la conduite (3) ayant un premier étranglement (8) fait pour provoquer une chute de la pression de gaz ;
- un curseur (13) capable de se déplacer dans une direction préétablie (D) et ayant une section active (14) qui forme un deuxième étranglement (15) sur la conduite (3) ;
- une chemise (17) pour loger et soutenir le curseur (13), la chemise (17) étant raccordée au corps central (2) par vissage (18), de sorte qu'en vissant ou en dévissant la chemise (17) par rapport au corps (2), la section active (14) du curseur (13) logé dans la chemise (17) se rapproche ou, respectivement, s'éloigne du corps (2), modifiant la taille du deuxième étranglement (15) ;
la chemise cylindrique (17) ayant une première paroi interne cylindrique (17a), avec laquelle un bourrelet en anneau (16) du curseur (13) s'engage par coulissement, et une deuxième paroi interne cylindrique (17b), coaxiale avec la première et ayant un plus petit diamètre, sur laquelle le curseur (13) s'engage par coulissement avec une portion proche de la section active (14) ;
le réducteur de pression de gaz étant **caractérisé en ce que** la première paroi interne (17a) et la deuxième paroi interne (17b) sont faites dans un seul corps.

2. Réducteur de pression selon la revendication 1, **caractérisé en ce que** la chemise (17) comprend une section cylindrique filetée (21) faite pour s'engager par vissage avec une surface cylindrique à filetage intérieur respective (20) sur le corps (2).

3. Réducteur de pression selon la revendication 2, **caractérisé en ce que**, à une zone d'extrémité (22) faite pour agir sur le deuxième étranglement (15), la chemise (17) comprend une rainure circonférentielle (23) pour loger un joint d'étanchéité au gaz en forme d'anneau (24).

4. Réducteur de pression selon une quelconque des revendications 1 à 3, **caractérisé en ce qu'**il comprend des moyens de blocage (27) de la chemise (17), lesdits moyens (27) étant faits pour empêcher la rotation en vissage ou en dévissage de la chemise (17) sur le corps (2), quand la section active (14) du curseur (13) se trouve dans une position souhaitée par rapport au corps (2).

5. Réducteur de pression selon la revendication 4, **caractérisé en ce que** les moyens de blocage (27) comprennent une vis sans tête filetée (26) introduite dans un trou débouchant respectif (25) fait dans le corps (2), la vis sans tête (26) étant faite pour s'engager avec la chemise (17).

6. Réducteur de pression selon la revendication 4, **caractérisé en ce que** les moyens de blocage comprennent un anneau de blocage fileté, vissé sur ladite section cylindrique filetée (21) de la chemise (17) et fait pour se serrer contre une paroi externe du corps (2).

7. Réducteur de pression selon une quelconque des revendications 1 à 6, **caractérisé en ce que** la chemise (17) comprend au moins une zone (28) qui s'engage avec un outil pour la rotation de la chemise (17) par rapport au corps (2).
